# EUROPÄISCHE PATENTSCHRIFT

(11) **EP 2 468 548 B1**
(45) Veröffentlichungstag und Bekanntmachung des Hinweises auf die Patenterteilung: **21.10.2015**
(21) Anmeldenummer: 11009875.3
(22) Anmeldetag: 15.12.2011
(51) Int. Cl.: B60J 7/06

(54) **Verstellvorrichtung für eine Dachkappe eine Faltverdecks**
Adjustment device for a top bow for a foldable roof
Dispositif de réglage d'une capote de toit pliable

(30) Priorität: 24.12.2010 DE 102010056246
(43) Veröffentlichungstag der Anmeldung: 27.06.2012
(73) Patentinhaber: Magna Car Top Systems GmbH, 74321 Bietigheim-Bissingen (DE)
(72) Erfinder: Katrini, Waleri, 01257 Dresden (DE); Papendorf, Marcus, 74357 Bönnigheim (DE); Klein, Berthold, 74343 Sachsenheim (DE); Liebhardt, Randolf, 71120 Grafenau (DE)
(74) Vertreter: Völger, Silke Beatrix

(56) Entgegenhaltungen:
- DE-A1- 3 816 977
- DE-A1-102007 047 457
- DE-A1-102008 026 547
- DE-A1-102009 009 349

## Beschreibung

Die vorliegende Erfindung betrifft eine Verstellvorrichtung für eine Dachkappe eines Faltverdecks eines Fahrzeugs mit den Merkmalen des Oberbegriffs des Anspruchs 1. Eine solche Verstellvorrichtung ist aus DE 102007047457 A bekannt.

Die Erfindung betrifft außerdem ein mit einer derartigen Verstellvorrichtung für eine Dachkappe eines Faltverdecks ausgestattetes Fahrzeug.

Ein Faltverdeck kann zum Verschließen einer Dachöffnung einen Verdeckstoff aufweisen, der in Fahrtrichtung mit seinem Ende an einer festen Dachkappe befestigt sein kann. An seinem hinteren Ende kann der Verdeckstoff beispielsweise mittels eines Spannbügels oder Eckspriegels an der Karosserie angebracht sein. Im Bereich der Dachkappe ist der Verdeckstoff vorteilhaft über die Dachkappe geführt und an deren vorderen Ende umgeschlagen und an der Unterseite der Dachkappe fest angebracht.

Beim Öffnen des Faltverdecks bewegt sich zuerst die Dachkappe aus ihrer geschlossenen Faltverdeckposition, wobei die Spannung des Verdeckstoffs, welche zum sicheren und dichten Verschließen der Dachöffnung benötigt wird, gelöst wird. In der Regel wird hierbei die Dachkappe aus der geschlossenen Endlage des Faltverdecks angehoben, so dass im Kontaktbereich der Dachkappe die Dichtung möglichst wenig belastet wird. Während des Öffnungsvorganges des Faltverdecks verbleibt die Dachkappe in einer leicht nach oben angestellten Position und wird in den hinteren Bereich der Dachöffnung über seitliche Führungen und Führungselemente verschoben. Der Verdeckstoff wird hierbei über regelmäßig angeordnete Querspriegel entsprechend der Länge des Faltverdecks gefaltet, so dass bei vollständig geöffnetem Faltverdeck der Verdeckstoff im Heckbereich mehrfach aufeinander gefaltet abgelegt werden kann. Hierbei liegt in der Regel die Dachkappe als abschließendes Element auf dem zusammen gefalteten Verdeckstoff auf.

In dieser Position ist es notwendig, dass zur Sicherung des abgelegten Faltverdecks dieses in seiner Endlagenposition relativ zur Fahrzeugkarosserie verriegelt wird. Vorteilhaft geschieht dies über den Betätigungs- und Verriegelungsmechanismus der Dachkappe, der schon bei geschlossenem Faltverdeck die Dachkappe in vorderer Position fixiert und verriegelt. Zur Ausführung der hierfür benötigten Bewegungen weisen der Verstellmechanismus, sowie die Führungselemente des Faltverdecks und der Dachkappe Zwangsführungen innerhalb der seitlichen Führungsschienen auf. Diese Mechanismen können entsprechend den vorbestimmten Bewegungen und Verschwenkungen sehr aufwändig und kompliziert sein, so dass Mechaniken mit vielen Bauteilen, sowie häufig ineinander greifende und zueinander verriegelbare Elemente zum Einsatz kommen. Hierbei besteht immer die Gefahr, dass bei komplizierten Verriegelungen und Betätigungen Störungen auftreten können, zu dem derartige Bauteilen von Faltverdecken meist sehr filigran ausgestaltet sind und somit bei hohen Belastungen leicht beschädigt werden können. Diese Bauteile übertragen häufig relativ große Kräfte, so dass sie aus entsprechend geeigneten Werkstoffen hergestellt sind. Durch die filigrane Ausführung, den teuren Werkstoff und den häufigen komplizierten Mechanismen sind derartige Führungs- und Verriegelungsbauteile in ihrer Herstellung sehr kostenintensiv.

Aus der DE 10 2009 009 349 A1 ist ein Faltverdeck für ein Fahrzeug bekannt, dass einen Verdeckstoff aufweist der an seinem vorderen Ende an einer Dachkappe abschließt. Die Dachkappe und der daran befestigte Dachstoff werden bei sich öffnendem Faltverdeck entgegen der Fahrtrichtung zum Heck des Fahrzeuges verschoben, wobei während des Öffnungsvorganges die Dachkappe zuerst eine vertikale Bewegung ausführt. Hierzu ist die Dachkappe über einen lenkerförmigen Halter an einem Führungskörper einer Dachbetätigungs- und Verriegelungseinheit gelagert, wobei der Führungskörper über ein Koppelglied mit einem vorderen Schlitten verbunden ist. Der Schlitten weist eine Kulisse auf, in der ein Gleitkörper eines Lenkerelementes aufgenommen und geführt ist. Das Lenkerelement ist mit dem lenkerförmigen Halter der Dachkappe gekoppelt, so dass beim Öffnungsvorgang des Faltverdecks der Schlitten entgegen der Fahrtrichtung verschoben wird und somit die Dachkappe entsprechend der Kulisse bewegt und angehoben wird. Weiter weist der Schlitten an seiner Unterseite eine Entriegelungskontur auf, die im Zuge der ersten Verschiebungsbewegungen (nach Aufstellen der Dachkappe) einen Verriegelungsmechanismus betätigt, der einen Riegel aus einer Fixierungsöffnung der Führungsschiene herauszieht. Über diese Entriegelung wird der Führungskörper, der ebenfalls als Schlitten ausgeführt ist, in seiner horizontalen Verschiebbarkeit freigesetzt, so dass die Dachkappe und der daran folgende Verdeckstoff in den Heckbereich der Dachöffnung verschoben werden kann.

In der DE 10 2007 047 457 B4 wird ein verstellbares Dachteil eines öffnungsfähigen Fahrzeugdaches beschrieben, dass mittels einer Lagereinrichtung an einer Führung des Fahrzeugdaches verschiebbar und schwenkbar ist. Hierzu wird das Fahrzeugdach mittels einer Antriebseinrichtung entlang der Führung bewegt, wobei über eine Steuereinrichtung die auf einem Abschnitt des Bewegungsweges des Dachteils wirkt, eingreift und die Lagereinrichtung steuert. Hierbei wird das Dachteil in seinem Neigungswinkel relativ zur Führung geschwenkt, wobei die Steuereinrichtung einen Anschlag an der Führung aufweist, die die Schwenkbewegung der Lagereinrichtung koordiniert. Das Dachteil ist hierbei über zwei Lenker an einem Schlitten gelagert, der entlang der Führungsbahnen der Führungsschienen verschoben werden kann. Im vorderen Bereich des Schlittens ist eine hakenförmige Verriegelung vorgesehen, mit der das Dachteil bei geschlossenem Fahrzeugdach fixiert und verriegelt werden kann. Der Antrieb zum Verschieben des Dachteils und dem daran angebrachten Verdeckstoff erfolgt über ein Antriebskabel, dass als Gewindekabel ausgelegt ist und über einen Antriebsmechanismus sowohl in als auch entgegen der Fahrtrichtung verschoben werden kann.

Eine flexible Dachhautanordnung eines Fahrzeuges zum Verschließen einer Dachöffnung ist in der EP 0 347 859 B1 dargestellt. Die flexible Dachhaut, vorzugsweise ein Verdeckstoff, ist an ihrem vorderen Ende mit einem harten Vorderteil, einer sogenannten Dachkappe verbunden. Die Dachkappe weist an ihren seitlichen Enden Halter auf, an denen zwei Lenker schwenkbar befestigt sind. Die Lenker sind an einem verschiebbaren Schlitten gelagert, wobei ein Lenker einen seitlichen Eingriffsstift aufweist, der in eine Kulisse der Führungsschiene eingreift.

Über diesen Eingriffsstift und die Kulisse wird dieser Lenker entsprechend der Form und dem Verlauf der Kulisse zwangsgeführt. Somit ist es möglich, dass die Dachkappe beim Öffnungsvorgang des Faltverdecks angehoben wird und diese Position während des Öffnungsvorgangs beibehält. Die Lenker sind wiederum auf einem Schlitten gelagert, der über einen Seilzug, beispielsweise ein Gewindekabel, in oder entgegen der Fahrtrichtung verschoben werden kann. Dieser Schlitten ist selber wiederum mit entsprechenden Ausnehmungen in einer Führungsschiene gelagert und verschiebbar. Die Führung des Führungsschlittens verläuft parallel zur Führungsschiene, in der die Kulisse zur Steuerung der Dachkappe eingebracht ist. Auch hier werden der Verdeckstoff, sowie die Dachkappe, bei geöffnetem Verdeck im hinteren Fahrzeugbereich abgelegt, wobei eine Verriegelung in dieser Position einzig und allein über die Spannung des Gewindekabels erfolgt. Eine zusätzliche Verriegelung mit Verriegelungselementen in geöffneter Position, sowie in geschlossener Position ist nicht vorgesehen. Bei geschlossenem Verdeck wird die Verriegelung der Dachkappe ausschließlich durch die Zwangsführung der Kulisse erzielt.

Aus der US 5,746,475 ist ein Fahrzeug mit einer Dachöffnung bekannt, bei der mehrere bewegliche flächige Dachelemente zur Verschließung der Dachöffnung vorgesehen sind. Die einzelnen Dachelemente sind im Bereich ihres vorderen Endes um eine quer zur Fahrzeuglängsachse angeordnete Querachse schwenkbar, wobei jeweils ihre hinteren Enden angehoben werden können. Hierzu können in seitlichen Schienen Schlitten in der Fahrzeuglängsrichtung verschoben werden, wobei die seitlichen Schienen eine Vielzahl von Führungen und Geometrien aufweisen können. Die Schienen sind im Öffnungsbereich der Dachöffnung fest mit der Karosserie verbunden. Über Träger der jeweiligen Schlitten, die mit den Dachelementen fest verbunden sind, werden diese entsprechend dem jeweiligen Schlitten über Führungskonturen geführt und gehalten. Die beim Verstellen des Schlittens gewünschte Verstellkinematik wird somit durch die Kontur der Schienen und der darin gleitenden Schlitten erreicht.

Die vorliegende Erfindung beschäftigt sich mit dem Problem, für ein Faltverdeck bzw. für ein damit ausgestattetes Fahrzeug eine verbesserte Ausführungsform anzugeben, die sich insbesondere dadurch auszeichnet, dass die Verstellung und Endlagenverriegelung des Faltverdecks durch eine vereinfachte Mechanik mit wenigen Bauteilen kostengünstig herzustellen ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, dass zum Verschließen einer Dachöffnung ein entlang der Dachöffnung bewegbarer Verdeckstoff vorgesehen ist, der im hinteren Fahrzeugbereich mittels eines Spannspriegels oder eines Eckspriegels an der Karosserie angebracht ist. Im vorderen Bereich des Verdeckstoffs ist dieser an einer Dachkappe befestigt, so dass bei geschlossenem Verdeck eine zur Abdichtung der Dachöffnung notwendige Spannung des Verdeckstoffs über die Position der Endlage der Dachkappe erzielt wird. Die Dachkappe ist hierbei als festes Element, vorzugsweise aus flächigen Blechteilen oder Kunststoffelementen aufgebaut, wobei die Dachkappe an ihren seitlichen Enden über Schwenkachsen bewegbar an Lenkern gelagert ist. Bei geschlossener Dachposition liegt zumindest ein vorderer Bereich der Dachkappe an einer in der Dachöffnung positionierten Dichtung auf, wobei zur sicheren Abdichtung die Dachkappe eine leichte Verformung, der in der Regel aus elastischen Materialien hergestellten Dichtung bewirkt. Zur Vermeidung von Beschädigungen beziehungsweise starker Abnutzung der Dichtung ist es vorteilhaft, wenn die Dachkappe bei beginnendem Öffnungsvorgang des Faltverdecks, angehoben werden kann. Eine reine Verschiebung der Dachkappe könnte die zuvor erwähnte Beschädigung beziehungsweise erhöhte Abnutzung der Dichtung bewirken.

Weiter ist es notwendig, dass bei geschlossenem Faltverdeck die Dachkappe in ihrer geschlossenen Position fixiert und verriegelt werden kann. Derartige Verriegelungen sind häufig sehr aufwändig und kompliziert ausgestaltet, wobei Riegelsteine oder spezielle Verriegelungsmechanismen als zusätzliche Mechaniken und Bauteile im Bereich der Dachführungen integriert werden müssen. Eine vorteilhafte Ausführung besteht darin, dass erfindungsgemäß ein vorderer Lenker der Dachkappe einen Verriegelungshaken aufweist, der bei geschlossener Dachkappe diese mittels eines Verriegelungshakens in einer Öffnung der Dachführung fixiert und diese Position dauerhaft beibehält. Somit wird gewährleistet, dass der in geschlossener Dachkappenposition notwendige Anpressdruck auf die Dichtung erreicht wird und auf den Verdeckstoff die zur Abdichtung notwendige Spannung aufgebracht wird. Weiter wird auf diese Art verhindert, dass eine unmotivierte Öffnung von Bereichen des Faltverdecks während des Fahrens auftreten kann.

Die Dachkappe ist in ihren seitlichen Endbereichen über zwei Lenker schwenkbar gelagert, wobei beide Lenker mit ihren entgegen der Dachkappe weisenden Enden an einem Führungskörper schwenkbar befestigt sind. Die Lenker sowie der Führungskörper können aus Metall oder aus einem Kunststoff gefertigt sein, wobei der Führungskörper vollständig, die Lenker zumindest teilweise in der Dachführung aufgenommen sind. Für die Endlage bei geöffnetem Faltverdeck weist der hintere Lenker ein über die Schwenkachse am Führungskörper verlängertes Ende auf, wobei das Ende hakenförmig ausgebildet ist. Dieser Haken kann bei geöffnetem Faltverdeck in eine Aussparung des hinteren Bereichs der Führungsschiene eingreifen, so dass die Dachkappe und der zuvor aufgefaltete Verdeckstoff in dieser Endlage positioniert und fixiert werden können. Weiter sind die Hakenform und die Aussparung so aufeinander abgestimmt, dass der Haken beim Eingreifen in die Aussparung den hinteren Lenker relativ so zum vorderen Lenker bewegt, dass die Dachkappe mit ihrer Vorderkante in Fahrtrichtung geschwenkt wird. Das so abgelegte Faltverdeck kann mehrere einzelne Faltungen und/oder einen Z-Schlag aufweisen, wobei Verdeckstoff und Dachkappe durch das Schwenken der Dachkappe in eine besonders kompakte Endlage gebracht werden.

Zur Endlagenpositionierung der Dachkappe wird diese jeweils über Verriegelungshaken oder hakenförmige Ausgestaltungen der Lenker in ihren Endpositionen der Dachführung verriegelt. Die Bewegung der Dachkappe erfolgt über diese Lenker und den Führungskörper, wobei die Lenker ein Viergelenk bilden. Über eine im vorderen Lenker eingebrachte Kulisse wird mittels eines Mitnehmerschlittens, der einen Mitnehmer aufweist, welcher in die Kulisse des vorderen Lenkers eingreift, die Bewegung des Faltverdecks erzeugt. Hierbei wird der Mitnehmerschlitten mittels eines Spannseils in oder entgegen der Fahrtrichtung bewegt, wobei das Spannseil in Form eines Bowdenzugs oder eines Gewindekabels ausgebildet sein kann.

Der gesamte Betätigungsmechanismus und Verriegelungsmechanismus des Faltverdecks besteht somit im Wesentlichen aus vier Bauteilen, die alle zumindest teilweise innerhalb der Dachführung beziehungsweise deren Führungsschiene aufgenommen sind. Diese Bauteile können im Bereich der Dachführung teilweise sowohl hintereinander wie auch nebeneinander positioniert sein, womit eine besonders kompakte Ausführung dieses Verriegelungsmechanismus und Betätigungsmechanismus erzielt wird. Durch diese einfache Ausgestaltung des Verriegelungs- und Betätigungsmechanismus kann auch die Dachführung, aus einem vorderen und einem hinteren Führungsschienenteil bestehen, die in ihrer jeweiliger Form und Gestaltung sehr einfach ausgelegt sein können. Das vordere Führungsschienenteil ist hierbei entlang der Dachöffnung im Wesentlichen horizontal ausgerichtet, wobei das hintere Führungsschienenteil eine gebogene Form entsprechend der C-Säule aufweist.

Auch ist es möglich, dass die Dachführung im Kontaktbereich zum Verdeckstoff mit einer Dichtung versehen ist. Durch die Ausgestaltung der Form insbesondere des Führungskörpers und des Mitnehmerschlittens können die Kontaktbereiche dieser Bauteile zur Dachführung relativ gering gehalten werden, so dass bei der Bewegung und Betätigung nur geringe Reibungskräfte zu erwarten sind. Selbstverständlich können entlang des Faltverdecks quer zur Fahrzeuglängsrichtung angeordnete Querspriegel vorgesehen sein, die beim Öffnen des Faltverdecks die Faltenlage bestimmen und somit die Ablageform des Verdeckstoffs vorgeben. Auch können die Querspriegel über weitere Führungskörper in der Dachführung aufgenommen und geführt werden, wobei bei sich öffnendem und faltendem Verdeckstoff die Führungskörper und deren benachbarte Führungskörper zur Einleitung einer Bewegung in Kontakt treten können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht der Dachführung mit Dachkappe und Verstellvorrichtung der Dachkappe bei geschlossenem Faltverdeck,
- Fig. 2: eine Vergrößerung der Verstellvorrichtung mit Dachkappe bei geschlossenem Faltverdeck und verriegelter Dachkappe,
- Fig. 3: die Verstellvorrichtung während des Öffnungsvorgangs des Faltverdecks mit angehobener Dachkappe,
- Fig. 4: die Verstellvorrichtung und die Dachkappe im Bereich der hinteren Führungsschiene vor Erreichen der Endlage bei geöffnetem Faltverdeck,
- Fig. 5: die Verstellvorrichtung und die geschwenkte Dachkappe in verriegelter Endlage bei geöffnetem Faltverdeck,
- Fig. 6: eine perspektivische Ansicht auf die hintere Führungsschiene mit verrastetem Haken des hinteren Lenkers bei geöffnetem Faltverdeck.

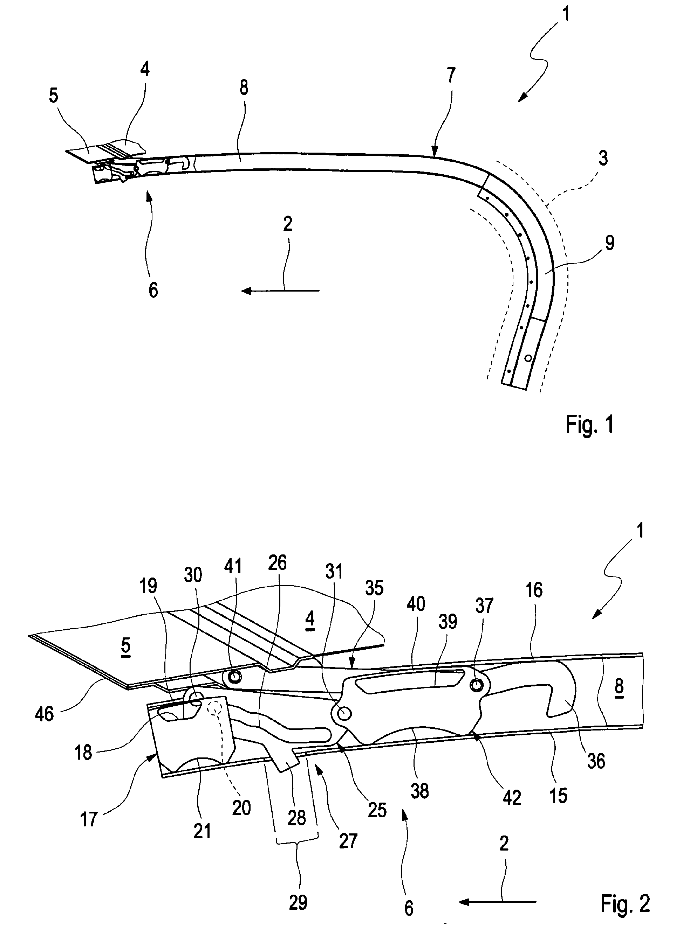

Figur 1 zeigt eine Seitenansicht der Dachführung 1 mit Dachkappe 5 und Verstellvorrichtung 6 der Dachkappe 5 bei geschlossenem Faltverdeck. Hierbei befindet sich die Dachkappe 5 in geschlossener Faltverdeckposition, wobei der Verdeckstoff 4 über einer Dachöffnung gespannt ist. Hierbei schließt die Dachkappe 5 mit ihrem vorderen Ende 46 die Dachöffnung dichtend ab, so dass im Übergangsbereich zwischen dem Dach, der Dachkappe 5 und dem Verdeckstoff 4 ein bündiger ÜbergangNerlauf entsteht.

Beim Öffnen des Faltverdecks wird die Dachkappe 5 entgegen der Fahrtrichtung 2 entlang der Dachführung 1 bewegt, wobei sich die Dachführung 1 aus einer vorderen Führungsschiene bzw. Führungsschienenteil 8 und einer hinteren Führungsschiene bzw. Führungsschienenteil 9 zusammensetzt. Die vordere Führungsschiene 8 ist in ihrer Ausgestaltung im Wesentlichen horizontal ausgerichtet, wobei diese an ihrem hinteren entgegen der Fahrtrichtung 2 weisenden Ende in die hintere Führungsschiene 9 übergeleitet wird. Die hintere Führungsschiene 9 ist als Verlängerung der vorderen Führungsschiene 8 zu sehen, wobei das freie Ende der hinteren Führungsschiene 9 in Richtung Fahrgastinnenraum weist. Die hintere Führungsschiene 9 ist entsprechend dem Verlauf der C-Säule 3 angepasst, so dass bei geschlossenem Verdeck nur die Karosserie und der Verdeckstoff zu erkennen sind. Zum Öffnen beziehungsweise zum Schließen des Faltverdecks wird die Verstellvorrichtung 6 mittels eines Spannseils (Bowdenzug oder Gewindekabel) entlang der vorderen und hinteren Führungsschiene 8, 9 bewegt, wobei das Faltverdeck außer seinen Endstellungen (geschlossenes Faltverdeck, geöffnetes Faltverdeck) beliebig viele Zwischenstellungen einnehmen kann. Die Führungsschienen 8, 9 der Dachführung 1 sind im Öffnungsbereich der Dachöffnung mit der Karosserie verbunden, wobei sowohl die Dachöffnung als auch Bereiche der Führungsschienen 8, 9 zur Aufnahme von Dichtungen vorgesehen sein können. Weiterhin ist es möglich, dass die Führungsschienen 8, 9 der Dachführung 1 so ausgelegt sind, dass eindringendes Wasser in Funktion einer Rinne gesammelt und abgeführt werden kann.

Zum Öffnen beziehungsweise Schließen des Faltverdecks ist eine Verstellvorrichtung 6 mit der Dachkappe 5 verbunden, die in vergrößerter Darstellung, bei geschlossenem Faltverdeck und verriegelter Dachkappe, in Figur 2 abgebildet ist. Hierbei ist die Dachkappe 5 in ihrer geschlossenen Endlagenposition mit der vorderen Führungsschiene 8 verriegelt, wobei die Vorderkante 46 der Dachkappe 5 auf einer hier nicht abgebildeten Dichtung im Bereich der Dachöffnung dichtend unter Vorspannung aufliegt. Der Verdeckstoff 4 ist in dieser Position über die Dachöffnung gespannt.

Die vordere Führungsschiene 8 der Dachführung 1, welche dem Verlauf der Dachöffnung folgt, ist mit ihrem in Fahrtrichtung 2 weisenden Ende nahe der Vorderkante 46 der Dachkappe 5 begrenzt. Die vordere Führungsschiene 8 wie auch die hintere Führungsschiene 9 weisen ein Profil auf, das zur Aufnahme von Schlitten und Führungskörpern geeignet ist.

Hierbei wird die Dachkappe 5 mittels eines vorderen Lenkers 25 und eines hinteren Lenkers 35 positioniert, beziehungsweise bewegt, wobei beide Lenker 25, 35 innerhalb der Dachführung 1 an einem Führungskörper 42 über Schwenkachsen 31, 37 gelagert sind. Beide Lenker 25, 35 sind im seitlichen Endbereich der Dachkappe 5 über Schwenkachsen 30, 41 mit der Dachkappe 5 schwenkbar verbunden.

Der vordere Lenker 25 ist über die Schwenkachse 30 im vorderen Drittel der Dachkappe 5 an dieser schwenkbar gelagert, wobei sein entgegen der Fahrtrichtung 2 weisendes Ende über die Schwenkachse 31 mit dem Führungskörper 42 schwenkbar verbunden ist. Der vordere Lenker 25 weist in etwa seiner Längserstreckung eine Kulisse 26 auf, die in ihrer Lage und ihrem Verlauf entsprechend den gewünschten Bewegungen der Dachkappe 5 ausgebildet ist. Im unteren Bereich des Lenkers 25 ist dieser mit einem Verriegelungshaken 28 ausgebildet, der wie in Figur 2 abgebildet, bei geschlossenem Faltverdeck in eine Aussparung 29 der vorderen Führungsschiene 8 eingreift und somit eine Verriegelung 27 der Dachkappe 5 zur Führungsschiene 8/Dachführung 1 und somit des gesamten Faltverdecks ermöglicht. Die Lagepositionierung des Lenkers 25 bei geschlossenem Faltverdeck wird durch die Auflage des unteren hinteren Bereichs des Lenkers 25, zwischen dem Verriegelungshaken 28 und der Schwenkachse 31 mit der unteren Begrenzung 15 der vorderen Führungsschiene 8 bewirkt.

Über einen Mitnehmerschlitten 17 der in seiner vertikalen Ausdehnung den inneren Abmessungen der Dachführung 1 entspricht, wird die Öffnungs- beziehungsweise Schließbewegung für die Verstellvorrichtung 6 erzeugt. Hierzu ist der Mitnehmerschlitten 17 über ein hier nicht abgebildetes Spannseil beziehungsweise Gewindekabel mit einer entsprechenden Antriebseinheit verbunden. Der Mitnehmerschlitten 17 ist im Bereich der unteren Begrenzung 15 der vorderen Führungsschiene 8 zur Reduzierung der Gleitreibung mit einer Aussparung 21 ausgebildet, so dass nur der vordere beziehungsweise der hintere Bereich des Mitnehmerschlittens 17 im Kontakt mit der unteren Begrenzung 15 der vorderen Führungsschiene 8 steht. An seiner oberen Begrenzung ist der Mitnehmerschlitten 17 mit einer Ausnehmung 18 versehen, so dass durch die Ausnehmung 18 die Oberkante des Mitnehmerschlittens 17 als dünner Steg ausgebildet ist. Es entsteht somit das Federelement 19, welches als dünner konvexer Steg mit der oberen Begrenzung 16 der vorderen Führungsschiene 8 in Kontakt steht. Über dieses Federelement 19 wird eine Grundspannung zwischen dem Mitnehmerschlitten 17 und der Dachführung 1 erzeugt, so dass der Mitnehmerschlitten 17 permanent unter gleichbleibender Anpresskraft in der Dachführung 1 geführt wird.

Im hinteren Bereich des Mitnehmerschlittens 17 weist dieser einen Mitnehmer 20 auf, der vorteilhaft als Stift oder Gleitkörper ausgebildet ist und in die Kulisse 26 des vorderen Lenkers 25 eingreift. Wird der Mitnehmerschlitten 17 entgegen der Fahrtrichtung 2 bewegt, so wird durch den Eingriff des Mitnehmers 20 in der Kulisse 26 der vordere Lenker 25 um die Schwenkachse 31 nach oben geschwenkt, so dass die Dachkappe 5 als erste Bewegung eine vertikale Aufstellbewegung nach oben erfährt. Diese Bewegung wird über die Dachkappe 5 und die Schwenkachse 51 auf den hinteren Lenker 35 übertragen, der somit um die Schwenkachse 37 vertikal nach oben schwenkt.

Entgegen der Fahrtrichtung 2 weisend, ist der hintere Lenker 35 über die Schwenkachse 37 hinaus verlängert, wobei die Verlängerung an ihrem Ende als Haken 36 ausgebildet ist. Das Ende des Hakens 36 ist als Kontaktbereich 45 ausgelegt, wobei die Verlängerung des hinteren Lenkers 35 einen Anschlag zwischen dem hinteren Lenker 35 und der oberen Begrenzung 16 der Dachführung 1 bildet. Beim Öffnen des Faltverdecks wird durch den Kontakt des Kontaktbereichs 45 des Hakens 26 zur unteren Begrenzung 15 der Führungsschiene 8, in diesem Fall der vorderen Führungsschiene 8, eine weitere Aufwärtsbewegung der Dachkappe 5 verhindert. Bei geschlossenem Faltverdeck ist der Kontaktbereich 45 des Hakens 36 von der unteren Begrenzung 15 beabstandet.

Beide Lenker 25, 35 sind voneinander beabstandet über die Schwenkachsen 31, 37 an einem Führungskörper 42 schwenkbar gelagert. Analog zum Mitnehmerschlitten 17 ist der Führungskörper 42 in seinem unteren Bereich zur Verringerung der Reibung zur unteren Begrenzung 15 der vorderen Führungsschiene 8 mit einer Aussparung 38 versehen, so dass auch hier nur im vorderen und hinteren Endbereich des Führungskörpers 42 ein direkter Kontakt zur Führungsschiene 8 entsteht. An seinem nach oben weisenden Ende ist der Führungskörper 42 ebenfalls mit einer nahe seiner Oberkante angeordneten Ausnehmung 39 versehen, wobei in Richtung der oberen Begrenzung 16 der vorderen Führungsschiene 8 ein dünnes, stegförmiges Verbindungselement verbleibt, dass als Federelement 40 ausgebildet ist. Auch hier erzeugt das Federelement 40, wie beim Mitnehmerschlitten 17, einen permanenten Anpressdruck an die obere Begrenzung 16 der vorderen Führungsschiene 8, so dass auch der Führungskörper 42 während einer öffnenden beziehungsweise schließenden Bewegung in den Führungsschienen 8, 9 unter einer Vorspannung gehalten bzw. verschoben werden kann. Über diese Federelemente 40, 19 des Führungskörpers 42 und des Mitnehmerschlittens 17 wird verhindert, dass eines dieser beiden Bauteile durch Spiel zur oberen beziehungsweise unteren Begrenzung 16, 15 der Dachführung 1 bewegt wird und Klappergeräusche erzeugt, beziehungsweise zu einem erhöhten Reibverschleiß führt.

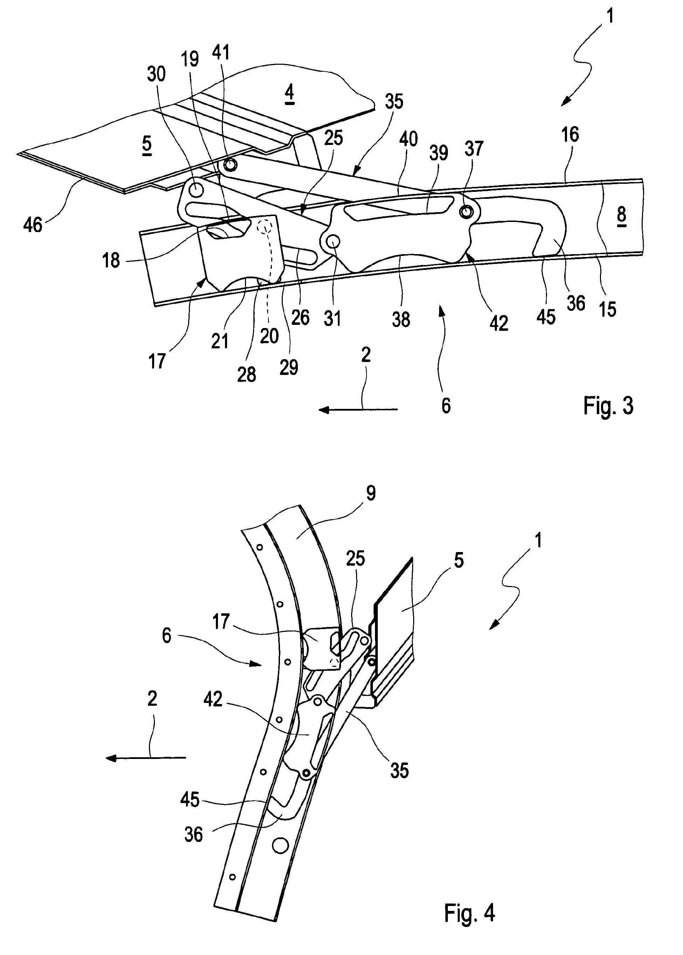

Die Figur 3 zeigt die Verstellvorrichtung 6 während des Öffnungsvorganges des Faltverdecks mit angehobener Dachkappe 5. Hierbei ist der Mitnehmerschlitten 17 entgegen der Fahrtrichtung 2 bewegt worden, wobei der Mitnehmer 20 in der Kulisse 26 des vorderen Lenkers 25 etwa in mittige Lage der Kulisse 26 bewegt wurde. Durch diese Bewegung wird der Lenker 25 vertikal nach oben geschwenkt, wobei der Verriegelungshaken 28 des vorderen Lenkers 25 aus der Aussparung 29 der vorderen Führungsschiene 8 heraus bewegt wird. Es wird somit die Verriegelung der Dachkappe 5 in der geschlossenen Faltverdeckposition aufgehoben, so dass die Dachkappe 5 und der Verdeckstoff 4, über eine weitere entgegen der Fahrtrichtung 2 wirkende Bewegung, in Richtung des Hecks des Fahrzeugs verschoben werden können.

Die vertikale Verschwenkung des vorderen Lenkers 25 wird über die Schwenkachsen 30 und 41 auf den hinteren Lenker 35 übertragen, wobei dieser annähernd parallel zum vordern Lenker 25 vertikal nach oben schwenkt. Der über die Schwenkachse 37 hinausragende Lenker 35 stößt hierbei im Kontaktbereich 45 des Hakens 36 an der unteren Begrenzung 15 der vorderen Führungsschiene 8 auf. Durch diese Begrenzung wird ein weiteres nach oben Bewegen der Dachkappe 5 verhindert, wobei über das Viergelenk der beiden Lenker 25, 35 außer der vertikalen Anhebung der Dachkappe nach oben die Vorderkante 46 nach unten und somit die Dachkappe 5 in eine nach vorn geneigte Lage gebracht wird. Durch diese schräge Anstellung der Dachkappe 5 wird der mit der Dachkappe 5 verbundene Verdeckstoff 4 bei einer weiteren Öffnungsbewegung des Faltverdecks in eine vorbestimmte Faltenlage bewegt.

In der Figur 4 ist die Verstellvorrichtung 6 und die Dachkappe 5 im hinteren Bereich der Dachführung 1 und somit der Führungsschiene 9 kurz vor Erreichen der Endlage bei geöffnetem Faltverdeck abgebildet. Durch den der C-Säule 3 angepassten Verlauf der hinteren Führungsschiene 9 ist die Verstellvorrichtung 6 mit der Dachkappe 5 aus ihrer nahezu horizontalen Positionierung in eine vertikale Position bewegt worden, wobei alle wie in Figur 3 beschriebenen Abhängigkeiten und Positionen der Bauteile der Verstellvorrichtung 6 unverändert vorliegen. Der Haken 36 ist weiterhin, wie bereits in Figur 3 beschrieben, im Kontaktbereich 45 an der unteren Begrenzung 15 der hinteren Führungsschiene 9 aufliegend, so dass analog zu Figur 3 auch hier die momentane Verschwenkbarkeit der Dachkappe 5 begrenzt bleibt. Durch diesen Kontakt des Hakens 36 zur unteren Begrenzung 15 der hinteren Führungsschiene 9 wird beispielsweise eine durch Windstaudruck entgegen der Fahrtrichtung 2 beaufschlagte Dachkappe 5 an einem weiteren Verschwenken gehindert. Wird die Dachkappe 5 jedoch in Fahrtrichtung 2 mit einer Kraft (Windstaudruck) beaufschlagt, so kann der Haken 36 aus seinem Kontaktbereich 45 an der unteren Begrenzung 15 abheben. Um auch hier eine Bewegung der Dachkappe 5 zu begrenzen, kann wie auch in Figur 3 erkenntlich, der Verriegelungshaken 28 auf der unteren Begrenzung 15 der Führungsschienen 8, 9 in Form eines Anschlags wirkend aufliegen und somit eine Bewegung der Dachkappe 5 verhindern.

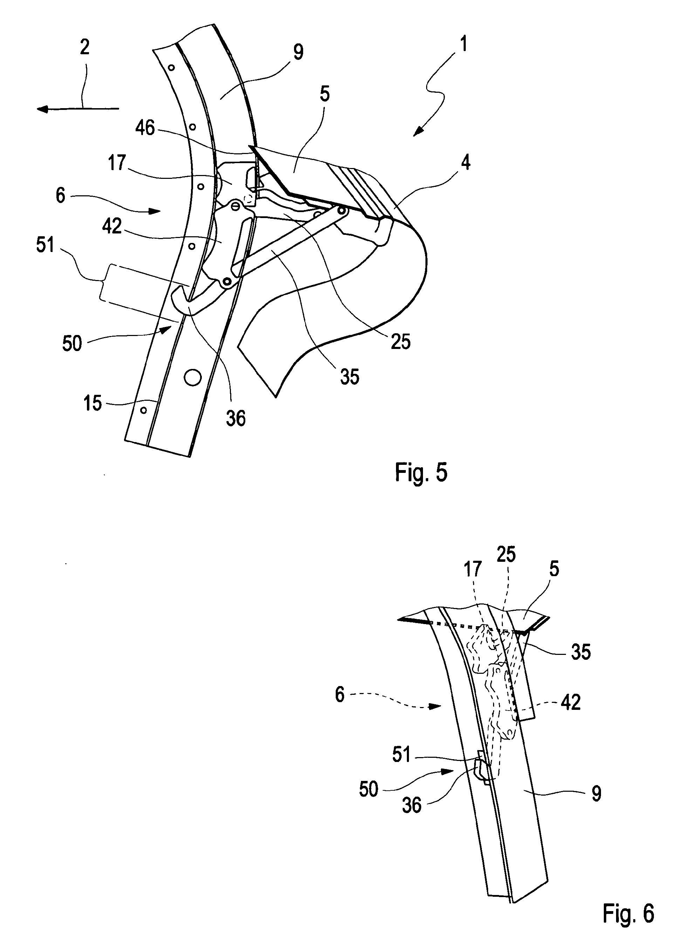

Bei Erreichen der Endlage des geöffneten Faltverdecks, greift wie in Figur 5 abgebildet, der Haken 36 in eine Aussparung 51 der unteren Begrenzung 15 der hinteren Führungsschiene 9 ein. Durch dieses Durchdringen des Hakens 36 der unteren Begrenzung 15 der hinteren Führungsschiene 9 wird die Verstellvorrichtung 6 in der geöffneten Endlagenposition verrastet. Hierbei schwenkt der hintere Lenker 35 so lange, bis dass der hintere Bereich des Lenkers 35 mit dem Haken 36 mit einer Begrenzung der Aussparung 51 in Kontakt tritt. Eine weiter mögliche Einschränkung dieser Bewegung der Dachkappe 5 wird dadurch erzielt, dass der vordere Lenker 25 in eine nahezu orthogonale Position zur hinteren Führungsschiene 9 geschwenkt wird. Dies erfolgt dadurch, dass der Mitnehmerschlitten 17 bis zum Kontakt mit dem Führungskörper 42 auf diesen zu bewegt wird, wobei über den Mitnehmer 20 und den Eingriff in die Kulisse 26 der vordere Lenker 25 geschwenkt wird. Eine weitere Verschwenkung des vorderen Lenkers 25 beziehungsweise des hinteren Lenkers 35 ist in dieser Position nicht mehr möglich, da durch den Kontakt des Mitnehmerschlittens 17, sowie durch den Kontakt des Hakens 36 im Aussparungsbereich 51 der hinteren Führungsschiene 9 die Dachkappenbewegung begrenzt wird. Der Verdeckstoff 4 ist in dieser Situation bereits mehrfach übereinander gefaltet, wobei beispielsweise eine Z-förmige Faltung des Verdeckstoffs 4 erreicht wird. Durch die Übersetzungsverhältnisse des vorderen Lenkers 25 zum hinteren Lenker 35 und der Schwenkachsen 31 und 37 erfährt die Dachkappe 5 eine Schwenkbewegung, wobei die Vorderkante 46 der Dachkappe 5 aus ihrer vertikalen, nach oben weisenden Position nahezu in eine horizontal in Fahrtrichtung 2 weisende Position geschwenkt wird.

In der Figur 6 ist eine perspektivische Ansicht auf die hintere Führungsschiene 9 mit verrastetem Haken 36 des hinteren Lenkers 35 bei geöffnetem Faltverdeck abgebildet. Hierbei wird noch einmal deutlich, dass der Mitnehmerschlitten 17 im Kontaktbereich zum Führungskörper 42 steht, wobei gleichzeitig der Haken 36 durch die Aussparung 51 der hinteren Führungsschiene 9 greift. Durch diese Verrastung des Hakens 36 in der Aussparung 51 wird eine Fixierung der Endlage des Faltverdecks in geöffneter Position gewährleistet. Selbstverständlich ist es möglich, dass sowohl bei geöffnetem Faltverdeck wie auch bei geschlossenem Faltverdeck beide Verriegelungshaken 36 und 28 über zusätzliche Arretierungsvorrichtungen gesichert werden können. Auch ist es denkbar, dass sowohl der Mitnehmerschlitten 17 wie auch der Führungskörper 42 über separate Arretierungen durch den seitlichen Bereich der vorderen beziehungsweise der hinteren Führungsschiene 8, 9 verriegelt werden könnten. Bei der in Figur 5 dargestellten Position der Dachkappe 5 bildet der vordere Lenker 25 zum hinteren Lenker 35 nahezu einen Winkel von 45° ab, wobei dieser in seiner Dimensionierung wie auch Positionierung von den Übersetzungsverhältnissen zwischen den Schwenkachsen 30 zu 31 und 41 zu 37 abhängt. Hierüber ist es auch möglich, die Endlagenposition der Dachkappe 5 entsprechend anzupassen.

Die Lenker 25, 35 wie auch der Mitnehmerschlitten 17 und der Führungskörper 42 können sowohl aus Metall wie auch aus Kunststoff gefertigt sein, wobei für den Mitnehmerschlitten 17 und den Führungskörper 42 eine Materialwahl aus Kunststoff bezüglich einer verringerten Gleitreibung innerhalb der Dachführung 1 vorteilhaft sind.

### Bezugszeichenliste

- 1: Dachführung
- 2: Fahrtrichtung
- 3: C-Säule
- 4: Verdeckstoff
- 5: Dachkappe
- 6: Verstellvorrichtung
- 7: Führungsschiene
- 8: vorderer Führungsschienenteil
- 9: hinterer Führungsschienenteil
- 15: untere Begrenzung
- 16: obere Begrenzung
- 17: Mitnehmerschlitten, Antriebsgleiter
- 18: Ausnehmung
- 19: Federelement
- 20: Mitnehmer
- 21: Aussparung
- 25: vorderer Lenker
- 26: Kulisse
- 27: Verriegelung, Verriegelungseinrichtung
- 28: Verriegelungshaken
- 29: Aussparung/Öffnung
- 30: Schwenkachse
- 31: Schwenkachse
- 35: hinterer Lenker
- 36: Haken
- 37: Schwenkachse
- 38: Aussparung
- 39: Ausnehmung
- 40: Federelement
- 41: Schwenkachse
- 42: Führungskörper, Führungsschlitten

- 45: Kontaktbereich
- 46: Vorderkante

- 50: Verrastung
- 51: Aussparung

## Patentansprüche

1. Verstellvorrichtung für eine Dachkappe eines Faltverdecks eines Fahrzeugs,
- mit einem Verdeckstoff (4), der in Fahrtrichtung (2) vorne in eine Dachkappe (5) übergeht,
- mit zwei Führungsschienen (7) die sich im montierten Zustand des Faltverdecks seitlich entlang einer Dachöffnung erstrecken,
- wobei die Dachkappe (5) seitlich über Lenker und Schlitten bewegbar in den Führungsschienen (7) gelagert ist,
- wobei die Dachkappe (5) bei sich öffnenden Faltverdeck zuerst vertikal angehoben und dann entgegen der Fahrtrichtung (2) entlang der Führungsschienen (7) verschoben wird,
- wobei wenigstens ein Schlitten eine Verriegelungsvorrichtung (6) zu einer ersten Führungsschiene (7) aufweist und diese Verriegelungsvorrichtung bei geschlossenem Faltverdeck die Dachkappe (5) in abgesenkter Position zur Führungsschiene (7) fixiert,
- wobei die Dachkappe (5) bei geöffnetem Faltverdeck mittels Lenker im Heck des Fahrzeugs mit ihrer Vorderkante in Fahrtrichtung (2) weisend auf dem zusammengefalteten Faltverdeck abgelegt ist,
**dadurch gekennzeichnet,**
- **dass** die Dachkappe (5) über eine Viergelenk-Kinematik aus einer geschlossenen Position in eine vertikal angehobene Position bewegt wird und das die Viergelenk-Kinematik aus einem vorderen und einem hinteren Lenker (25, 35) gebildet wird,
- **dass** die vertikale Anhebung der Dachkappe (5) sowie die Bewegung der Dachkappe (5) entlang der ersten Führungsschiene (7) mittels eines entlang der Führungsschiene (7) bewegbaren, mit dem vorderen Lenker (25) über einen Mitnehmer (20) gekoppelten Mitnehmerschlitten (17) erfolgt,
- **dass** der Mitnehmer (20) des Mitnehmerschlittens (17) in eine Kulisse (26) des vorderen Lenkers (25) eingreift,
- **dass** bei der vertikalen Anhebung der Dachkappe (5) ein Verriegelungshaken (28) des vorderen Lenkers (25) aus einer Aussparung (29) eines vorderen Teils (8) der ersten Führungsschiene (7) herausbewegt wird,
- **dass** bei geöffnetem Faltverdeck die Dachkappe (5) mit ihrer Vorderkante (46) im Wesentlichen in Fahrtrichtung (2) weist.

2. Verstellvorrichtung für eine Dachkappe eines Faltverdecks eines Fahrzeugs nach Anspruch 1,
**dadurch gekennzeichnet,**
**dass** der Mitnehmerschlitten (17) in der ersten Führungsschiene (7) geführt wird und über ein Spannseil in oder entgegen der Fahrtrichtung (2) bewegt wird.

3. Verstellvorrichtung für eine Dachkappe eines Faltverdecks eines Fahrzeugs nach Anspruch 1,
**dadurch gekennzeichnet,**
**dass** der vordere und der hintere Lenker (25, 35) an einem entlang der ersten Führungsschiene (7) bewegbaren Führungskörper (42) schwenkbar gelagert sind.

4. Verstellvorrichtung für eine Dachkappe eines Faltverdecks eines Fahrzeugs nach Anspruch 3,
**dadurch gekennzeichnet,**
**dass** der hintere Lenker (35) über seine Schwenkachse (37) am Führungskörper (42) hinaus entgegen der Fahrtrichtung (2) verlängert ist und dass das Ende dieser Verlängerung als Haken (36) ausgebildet ist.

5. Verstellvorrichtung für eine Dachkappe eines Faltverdecks eines Fahrzeugs nach Anspruch 1, 3 und 4,
**dadurch gekennzeichnet,**
**dass** bei Bewegung der Dachkappe (5) entgegen der Fahrtrichtung (2) ein Kontaktbereich (45) des Hakens (36) entlang der unteren Begrenzung (15) der ersten Führungsschiene (7) gleitet.

6. Verstellvorrichtung für eine Dachkappe eines Faltverdecks eines Fahrzeugs nach Anspruch 5,
**dadurch gekennzeichnet,**
**dass** während der Bewegung der Dachkappe (5) entlang der ersten Führungsschiene (7) der Mitnehmerschlitten (17) mit dem Mitnehmer (20) etwa in mittiger Lage der Kulisse (26) des vorderen Lenkers (25) angeordnet ist und eine weitere Verlagerung des Mitnehmerschlittens (17) durch den Kontakt des Kontaktbereichs (45) des Hakens (36) mit der unteren Begrenzung (15) der Führungsschiene (7) verhindert wird.

7. Verstellvorrichtung für eine Dachkappe eines Faltverdecks eines Fahrzeugs nach einem oder mehrerer der vorangehenden Ansprüche,
**dadurch gekennzeichnet,**
**dass** während der Bewegung der Dachkappe (5) entlang der ersten Führungsschiene (7) der Verriegelungshaken (28) entlang der unteren Begrenzung (15) der ersten Führungsschiene (7) gleitet.

8. Verstellvorrichtung für eine Dachkappe eines Faltverdecks eines Fahrzeugs nach Anspruch 3,
**dadurch gekennzeichnet,**
**dass** bei geöffnetem Faltverdeck der vordere Lenker (25) und der hintere Lenker (35) etwa einem Winkel von 45 Winkelgraden zueinander bilden, wobei der Mitnehmerschlitten (17) unterhalb des aufgestellten vorderen Lenkers (25) und am Führungskörper (42) anliegend positioniert ist.

9. Verstellvorrichtung für eine Dachkappe eines Faltverdecks eines Fahrzeugs nach den Ansprüchen 1 und 8,
**dadurch gekennzeichnet,**
**dass** ein hinterer Teil (9) der ersten Führungsschiene (7) in Endlage des geöffneten Faltverdecks eine Aussparung (51) zur Verrastung (50) des Hakens (36) des hinteren Lenkers (35) aufweist.

10. Verstellvorrichtung für eine Dachkappe eines Faltverdecks eines Fahrzeugs nach den Ansprüchen 1, 8 und 9,
**dadurch gekennzeichnet,**
**dass** bei der Verrastung (50) der Haken (36) durch die Aussparung (51) ragt und somit das Schwenken der Dachkappe (5) sowie die Fixierung der Dachkappe (5) bei geöffneter Dachposition gewährleistet.

11. Verstellvorrichtung für eine Dachkappe eines Faltverdecks eines Fahrzeugs nach Anspruch 1,
**dadurch gekennzeichnet,**
**dass** bei geöffnetem Faltverdeck die sich in hinterer Ablageposition befindende Dachkappe (5) mit dem an der Dachkappe (5) angebrachten Verdeckstoff (4) im Wesentlichen eine Z-Form bildet.

12. Verstellvorrichtung für eine Dachkappe eines Faltverdecks eines Fahrzeugs nach den Ansprüchen 1 und 2,
**dadurch gekennzeichnet,**
**dass** eine selbstständige Bewegung der Dachkappe (5) bei geschlossenem oder geöffnetem Faltverdeck durch den in jeweiliger Richtung kraftbeaufschlagten Mitnehmerschlitten (17) verhindert wird, wobei die Kraftbeaufschlagung des Mitnehmerschlittens (17) über das gespannte Spannseil erfolgt.

13. Fahrzeug, insbesondere Kraftfahrzeug, mit einer Verstellvorrichtung für eine Dachkappe eines Faltverdecks nach einem der Ansprüche 1 bis 12.

## Claims

1. Adjustment device for a top bow for a foldable roof of a vehicle,
- with a roof material (4) which merges at the front in the direction of travel (2) into a top bow (5),
- with two guide rails (7) which, in the fitted state of the foldable roof, extend laterally along a roof opening,
- wherein the top bow (5) is mounted so as to be moveable in the guide rails (7) laterally via links and carriages,
- wherein, as the foldable roof opens, the top bow (5) is first of all raised vertically and is then displaced along the guide rails (7) counter to the direction of travel (2),
- wherein at least one carriage has a locking device (6) with respect to a first guide rail (7), and, when the foldable roof is closed, said locking device secures the top bow (5) in a lowered position with respect to the guide rail (7),
- wherein, when the foldable roof is open, the top bow (5) is deposited on the folded-up foldable roof by means of links in the rear of the vehicle with its front edge pointing in the direction of travel (2),
**characterized**
- **in that** the top bow (5) is moved from a closed position into a vertically raised position via four-bar linkage kinematics, and in that the four-bar linkage kinematics is formed from a front and a rear link (25, 35),
- **in that** the vertical raising of the top bow (5) and the movement of the top bow (5) along the first guide rail (7) takes place by means of a driver carriage (17) which is moveable along the guide rail (7) and is coupled to the front link (25) via a driver (20),
- **in that** the driver (20) of the driver carriage (17) engages in a slot (26) in the front link (25),
- **in that**, when the top bow (5) is raised vertically, a locking hook (28) of the front link (25) is moved out of a recess (29) in a front part (8) of the first guide rail (7),
- **in that**, when the foldable roof is open, the front edge (46) of the top bow (5) substantially points in the direction of travel (2).

2. Adjustment device for a top bow for a foldable roof of a vehicle according to Claim 1, **characterized in that** the driver carriage (17) is guided in the first guide rail (7) and is moved in or counter to the direction of travel (2) via a tensioning cable.

3. Adjustment device for a top bow for a foldable roof of a vehicle according to Claim 1, **characterized in that** the front and the rear link (25, 35) are mounted pivotably on a guide body (42) which is moveable along the first guide rail (7).

4. Adjustment device for a top bow for a foldable roof of a vehicle according to Claim 3, **characterized in that** the rear link (35) is extended beyond the pivot axis (37) thereof on the guide body (42) counter to the direction of travel (2), and **in that** the end of said extension is designed as a hook (36).

5. Adjustment device for a top bow for a foldable roof of a vehicle according to Claims 1, 3 and 4, **characterized in that**, when the top bow (5) moves counter to the direction of travel (2), a contact region (45) of the hook (36) slides along the lower boundary (15) of the first guide rail (7).

6. Adjustment device for a top bow for a foldable roof of a vehicle according to Claim 5, **characterized in that**, during the movement of the top bow (5) along the first guide rail (7), the driver carriage (17) is arranged with the driver (20) approximately in a central position in the slot (26) in the front link (25) and further shifting of the driver carriage (17) is prevented by contact of the contact region (45) of the hook (36) with the lower boundary (15) of the guide rail (7).

7. Adjustment device for a top bow for a foldable roof of a vehicle according to one or more of the preceding claims, **characterized in that**, during the movement of the top bow (5) along the first guide rail (7), the locking hook (28) slides along the lower boundary (15) of the first guide rail (7).

8. Adjustment device for a top bow for a foldable roof of a vehicle according to Claim 3, **characterized in that** when the foldable roof is open, the front link (25) and the rear link (35) form approximately an angle of 45 angular degrees with respect to each other, wherein the driver carriage (17) is positioned below the erected front link (25) and bearing against the guide body (42).

9. Adjustment device for a top bow for a foldable roof of a vehicle according to Claims 1 and 8, **characterized in that**, in an end position of the open foldable roof, a rear part (9) of the first guide rail (7) has a recess (51) for the latching (50) of the hook (36) of the rear link (35).

10. Adjustment device for a top bow for a foldable roof of a vehicle according to Claims 1, 8 and 9, **characterized in that**, in the event of the latching (50), the hook (36) protrudes through the recess (51) and therefore the pivoting of the top bow (5) and the securing of the top bow (5) in an open roof position are ensured.

11. Adjustment device for a top bow for a foldable roof of a vehicle according to Claim 1, **characterized in that**, when the foldable roof is open, the top bow (5), which is located in a rear storage position, substantially forms a Z shape with the roof material (4) attached to the top bow (5).

12. Adjustment device for a top bow for a foldable roof of a vehicle according to Claims 1 and 2, **characterized in that**, when the foldable roof is closed or open, an independent movement of the top bow (5) is prevented by the driver carriage (17), to which force is applied in the respective direction, wherein force is applied to the driver carriage (17) via the taut tensioning cable.

13. Vehicle, in particular motor vehicle, with an adjustment device for a top bow for a foldable roof according to one of Claims 1 to 12.

## Revendications

1. Dispositif de réglage pour une coiffe de toit d'une capote pliable d'un véhicule,
- avec une toile de capote (4), qui se prolonge en une coiffe de toit (5) vers l'avant dans le sens de la marche (2),
- avec deux rails de guidage (7) qui, dans l'état monté de la capote pliable, s'étendent latéralement le long d'une ouverture de toit,
- dans lequel la coiffe de toit (5) est montée de façon mobile latéralement dans les rails de guidage (7) au moyen de bielles et de curseurs,
- dans lequel la coiffe de toit (5) est d'abord soulevée verticalement lors de l'ouverture de la capote pliable puis elle est déplacée à l'opposé du sens de la marche (2) le long des rails de guidage (7),
- dans lequel au moins un curseur présente un dispositif de verrouillage (6) sur un premier rail de guidage (7) et ce dispositif de verrouillage fixe la coiffe de toit (5) en position abaissée au rail de guidage (7) lorsque la capote pliable est fermée,
- dans lequel la coiffe de toit (5) est appliquée, lorsque la capote pliable est ouverte, au moyen de bielles à l'arrière du véhicule sur la capote pliable repliée avec son bord avant orienté dans le sens de la marche (2),
**caractérisé en ce que**
- la coiffe de toit (5) est déplacée par un mécanisme à parallélogramme articulé d'une position fermée à une position soulevée verticalement et le mécanisme à parallélogramme articulé est formé d'une bielle avant et d'une bielle arrière (25, 35),
- le soulèvement vertical de la coiffe de toit (5) ainsi que le mouvement de la coiffe de toit (5) le long du premier rail de guidage (7) est effectué au moyen d'un curseur d'entraînement (17) couplé à la bielle avant (25) par un entraîneur (20) et mobile le long du rail de guidage (7),
- l'entraîneur (20) du curseur d'entraînement (17) s'engage dans une coulisse (26) de la bielle avant (25),
- lors du soulèvement vertical de la coiffe de toit (5), un crochet de verrouillage (28) de la bielle avant (25) est déplacé hors d'une découpe (29) d'une partie antérieure (8) du premier rail de guidage (7),
- lorsque la capote pliable est ouverte, la coiffe de toit (5) est orientée avec son bord avant (46) essentiellement dans le sens de la marche (2).

2. Dispositif de réglage pour une coiffe de toit d'une capote pliable d'un véhicule selon la revendication 1, **caractérisé en ce que** le curseur d'entraînement (17) est guidé dans le premier rail de guidage (7) et est déplacé par un câble tendeur dans le sens de la marche (2) ou en sens contraire.

3. Dispositif de réglage pour une coiffe de toit d'une capote pliable d'un véhicule selon la revendication 1, **caractérisé en ce que** la bielle avant et la bielle arrière (25, 35) sont montées de façon pivotante sur un corps de guidage (42) mobile le long du premier rail de guidage (7).

4. Dispositif de réglage pour une coiffe de toit d'une capote pliable d'un véhicule selon la revendication 3, **caractérisé en ce que** la bielle arrière (35) est prolongée au-delà de son axe de pivotement (37) sur le corps de guidage (42) à l'opposé du sens de la marche (2) et **en ce que** l'extrémité de ce prolongement est configurée en forme de crochet (36).

5. Dispositif de réglage pour une coiffe de toit d'une capote pliable d'un véhicule selon la revendication 1, 3 et 4, **caractérisé en ce que**, lors du mouvement de la coiffe de toit (5) à l'opposé du sens de la marche (2), une région de contact (45) du crochet (36) glisse le long de la paroi inférieure (15) du premier rail de guidage (7).

6. Dispositif de réglage pour une coiffe de toit d'une capote pliable d'un véhicule selon la revendication 5, **caractérisé en ce que**, pendant le mouvement de la coiffe de toit (5) le long du premier rail de guidage (7), le curseur d'entraînement (17) avec l'entraîneur (20) est disposé environ en position centrale de la coulisse (26) de la bielle avant (25) et un autre déplacement du curseur d'entraînement (17) est empêché par le contact de la région de contact (45) du crochet (36) avec la paroi inférieure (15) du rail de guidage (7).

7. Dispositif de réglage pour une coiffe de toit d'une capote pliable d'un véhicule selon une ou plusieurs des revendications précédentes, **caractérisé en ce que**, pendant le mouvement de la coiffe de toit (5) le long du premier rail de guidage (7), le crochet de verrouillage (28) glisse le long de la paroi inférieure (15) du premier rail de guidage (7).

8. Dispositif de réglage pour une coiffe de toit d'une capote pliable d'un véhicule selon la revendication 3, **caractérisé en ce que**, lorsque la capote pliable est ouverte, la bielle avant (25) et la bielle arrière (35) forment l'une avec l'autre un angle d'environ 45 degrés d'angle, dans lequel le curseur d'entraînement (17) est positionné en dessous de la bielle avant (25) relevée et en application sur le corps de guidage (42).

9. Dispositif de réglage pour une coiffe de toit d'une capote pliable d'un véhicule selon les revendications 1 et 8, **caractérisé en ce qu'**une partie postérieure (9) du premier rail de guidage (7) présente, en position terminale de la capote pliable ouverte, une découpe (51) pour l'encliquetage (50) du crochet (36) de la bielle arrière (35).

10. Dispositif de réglage pour une coiffe de toit d'une capote pliable d'un véhicule selon les revendications 1, 8 et 9, **caractérisé en ce que** lors de l'encliquetage (50) le crochet (36) pénètre à travers la découpe (51) et garantit ainsi le pivotement de la coiffe de toit (5) ainsi que la fixation de la coiffe de toit (5) dans la position de toit ouverte.

11. Dispositif de réglage pour une coiffe de toit d'une capote pliable d'un véhicule selon la revendication 1, **caractérisé en ce que**, lorsque la capote pliable est ouverte, la coiffe de toit (5) se trouvant dans la position de rangement arrière forme essentiellement une forme de Z avec la toile de capote (4) attachée à la coiffe de toit (5).

12. Dispositif de réglage pour une coiffe de toit d'une capote pliable d'un véhicule selon les revendications 1 et 2, **caractérisé en ce qu'**un mouvement automatique de la coiffe de toit (5) avec la capote pliable fermée ou ouverte est empêché par le curseur d'entraînement (17) soumis à une force dans la direction respective, dans lequel l'application d'une force au curseur d'entraînement (17) est effectuée par le câble tendeur tendu.

13. Véhicule, en particulier véhicule à moteur, avec un dispositif de réglage pour une coiffe de toit d'une capote pliable d'un véhicule selon l'une quelconque des revendications 1 à 12.
